# EUROPÄISCHE PATENTSCHRIFT

(11) **EP 0 565 754 B1**
(45) Veröffentlichungstag und Bekanntmachung des Hinweises auf die Patenterteilung: **27.12.1995**
(21) Anmeldenummer: 92106475.4
(22) Anmeldetag: 15.04.1992
(51) Int. Cl.: C08G 18/10, C08G 18/08, C08G 18/38, C09D 175/04, C08K 5/45

(54) **Stabilisierte Überzugsmittel auf Basis von Urethanpräpolymeren mit freien Isocyanatgruppen**
Stabilized coating composition on the basis of urethaneprepolymers having free isocyanate groups
Composition de revêtement stabilisée à base de prépolymères d'uréthane à groupes isocyanates libres

(43) Veröffentlichungstag der Anmeldung: 20.10.1993
(73) Patentinhaber: Blum, Holger, D-20144 Hamburg (DE)
(72) Erfinder: Blum, Holger, D-20144 Hamburg (DE)
(74) Vertreter: Kirschner, Klaus Dieter, Dipl.-Phys.

(56) Entgegenhaltungen:
- GB-A- 1 173 018

## Beschreibung

Die Erfindung betrifft ein mineralisch gefülltes Überzugsmittel auf Basis von Urethanpräpolymeren mit freien Isocyanatgruppen, das unter dem Einfluß von Feuchtigkeit vernetzt.

Feuchtigkeitsvernetzende Urethanpräpolymere mit endständigen Isocyanatgruppen weisen - bei Lagerung in verschlossenen Gebinden - in Gegenwart von mineralischen Füllstoffen, insbesondere Silikat-Füllstoffen der weiter unten angegebenen Formel II, nur eine mangelhafte Lagerstabilität auf und erfahren einen stetigen Viskositätsanstieg bis zum Gelieren des Überzugsmittels, selbst wenn dieses unter Abschluß von Luftfeuchtigkeit gehalten wird. Diese ungünstige Einwirkung insbesondere von Silikatfüllstoffen, verursacht unter anderem durch katalytische Trimerisation der freien Isocyanatgruppen, ist dem Fachmann bekannt, siehe beispielsweise E.N. Doyle; "The Delopment And Use Of Polyurethane Products", New York 1971, S. 77 ff.

Aus der Literatur (R.A.Bienemann et al., Off. Digest 32, 273 (1960) oder J.H. Saunders, "Polyurethanes Chemistry and Technology", Teil II, Seite 533, New York 1964) ist eine Methode zur Inertisierung von reaktiven Pigmenten bekannt, bei der das Pigment mit einem reinen Isocyanat in einem Lösungsmittel so vorbehandelt wird, daß alle reaktiven Gruppen und Stoffe im Pigment mit dem reinen Isocyanat vorreagieren können, bevor das Urethanpräpolymer mit endständigen Isocyanatgruppen hinzugegeben wird. Diese Methode erfordert die Anwesenheit von Lösungsmitteln und ist nur unter beträchtlichem technischen Aufwand durchführbar.

DE-A-1 900 513, DE-A-2 030 316, DE-C-1 245 590, US-A-4 383 070 und EP-A-O 275 839 lehren die Stabilisierung von feuchtigkeitsvernetzende Urethanpräpolymere und ggf. reaktive Füllstoffe enthaltenden Zubereitungen durch Zugabe von Monoisocyanaten.

Es sind ferner viskositätsstabile Überzugmittel bekannt, die Urethanpräpolymere mit endständigen Isocyanatgruppen, gelöst in Dimethylformamid, sowie als Stabilisator 0,01% bis 2 Gew-% eines Ammoniumsalzes einer anorganischen Säure enthalten (US-A-3 939 111).

Bei Nacharbeitung der obengenannten Verfahren zur Stabilisierung von Urethanpräpolymeren mit endständigen Isocyanatgruppen in Gegenwart von Silikat-Füllstoffen der weiter unten angegebenen allgemeinem Formel II wurde festgestellt, daß ausreichend stabile Zubereitungen mit mindestens 12-monatiger Lagerzeit bei Raumptemperatur nur dann hergestellt werden können, wenn der freie Isocyanatgehalt der Zubereitung oberhalb von etwa 2,4 % liegt. Einige Vorschriften versagten vollständig, weil die Entfernung der Lösungsmittel durch Abdampfen im Hochvakuum einherging mit der Gelierung des Urethanpräpolymers.

Der Erfindung liegt daher die Aufgabe zugrunde, einen Weg zu finden, Überzugsmittel auf der Basis von Urethanpräpolymeren mit freien Isocyanatgruppen in Gegenwart von mineralischen Füllstoffen lagerbeständig zu machen, d.h. ihnen für die Lagerung unter Ausschluß von Feuchtigkeit eine verbesserte Viskositätsstabilität zu verleihen.

Diese Aufgabe wird erfindungsgemäß mit einem Überzugsmittel der eingangs genannten Art gelöst, das als stabilisierenden Zusatz eine Kombination aus
a) einem Thiophenderivat der Formel I 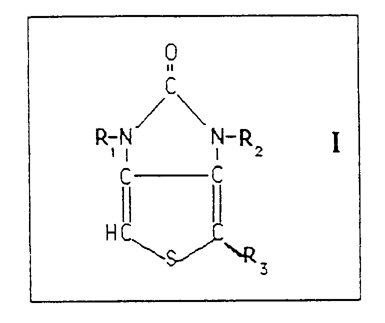 worin R₁ und R₂ jeweils eine Acrylgruppe mit 1 bis 8 C-Atomen ist und R₃ ein organischer Rest mit 1 bis 12 C-Atomen ist, sowie
b) einem Arylsulfonylisocyanat der Formel

   R₄-SO₂-N=C=O

   worin R₄ ein ein- oder zweikerniger aromatischer Kohlenwasserstoff mit bis zu 12 C-Atomen ist, der durch ein oder mehrere mit dem Überzugsmittel unreaktive Substituenten substituiert sein kann, enthält.

Besonders wirkungsvoll ist die erfindungsgemäße Stabilisatorkombination bei Überzugsmitteln mit einem Gehalt an endständigen Isocyanatgruppen von 0,2 bis 1,4 Gew.-%, die mit mineralischen Füllstoffen auf Silikatbasis der nachstehenden Formel II gefüllt sind, 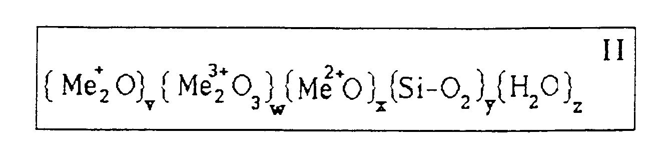
worin Me⁺ für ein oder mehrere einwertige Metalle steht, beispielsweise Na⁺ oder K⁺, Me²⁺ für ein oder mehrere 2-wertige Metalle steht, beispielsweise Ca²⁺ oder Mg²⁺ und Me³⁺ für ein oder mehrere 3-wertige Metalle steht, beispielsweise Al³⁺ oder Fe³⁺. v, w, x, y und z stehen für die durch das jeweils eingesetzte Mineral vorgegebenen stöchiometrischen Mengen.

Im Thiophenderivat der Formel I sind die Reste R₁ und R₂ vorzugsweise gleich und stellen eine Acetyl- oder eine andere gebräuchliche Acylgruppe dar. R₃ ist vorzugsweise ein Kohlenwasserstoffrest von 1 bis 12 C-Atomen, der einfach oder mehrfach substituiert sein kann. Geeignete Substituenten sind solche, die gegenüber dem Überzugsmittel unreaktiv sind, beispielsweise Halogene, NO₂-, CN-, Alkyl-, Alkoxy- und Carbonyloxyalkylgruppen. Vorzugsweise ist R₃ ein Alkylrest oder ein mit einer Carbonyloxyalkylgruppe substituierter Alkylrest von 1 bis 8 C-Atomen.

Bei dem erfindungsgemäß verwandten Arylsulfonylmonoisocyanat der Formel

R₄-SO₂-N=C=O

steht R₄ für den Rest eines 1- oder 2-kernigen aromatischen Kohlenwasserstoffs, der durch ein oder mehrere mit dem Überzugsmittel unreaktive Substituenten substituiert sein kann. Bevorzugte Substituenten sind Halogenatome, NO₂-, CN-, Alkyl- oder Alkoxygruppen. Besonders bevorzugt sind Phenyl-, p-Tolyl-, p-Cumyl- oder Naphthylsulfonylisocyanat. Die Herstellung dieser Verbindungen ist beispielsweise aus der DE-C-1 289 526 bekannt.

Das erfindungsgemäße Überzugsmittel enthält das Thiophenderivat der Formel I zweckmäßigerweise in einer Menge von 0,01 bis 1 Gew.-%, vorzugsweise von 0,1 bis 0,3 Gew.-%, jeweils bezogen auf das Präpolymer. Das Arylsulfonylmonoisocyanat wird zweckmäßigerweise in einer Menge von 0,1 bis 1,0 Gew.-%, vorzugsweise von 0,1 bis 0,5 Gew.-%, zugesetzt, jeweils bezogen auf das Präpolymer.

Das erfindungsgemäße Überzugsmittel kann über längere Zeiträume hinweg, beispielsweise 12 Monate lang, in verschlossenen Gefäßen unter Ausschluß von Luftfeuchtigkeit bei Raumtemperatur gelagert werden, ohne daß es zum Gelieren kommt, d.h. die Zubereitung weist eine hervorragende Lagerbeständigkeit auf, die auf die synergistisehe Wirkung der erfindungsgemäß verwendeten Stabilistorkombination zurückzuführen ist und mit den bisher bekannten Stabilisatoren nicht erreichbar war.

Bei den erfindungsgemäß zu stabilisierenden Urethanpräpolymeren mit endständigen Isocyanatgruppen handelt es sich um Reaktionsprodukte von Polyolen auf der Basis von Polyestern, Polyethern oder Polybutadien, um nur einige Möglichkeiten zu nennen, mit Diisocyanaten der allgemeinen Formel

O=C=N-R₅-N=C=O

worin R₅ den Rest eines üblichen ein- oder zweikernigen aromatischen, aliphatischen oder alicyclischen Kohlenwasserstoffes bedeutet, der durch Alkyl-, Alkoxy- oder Halogenatome substituiert sein kann. Indem die Stöchiometrie bei der Herstellung der Urethanpräpolymere so festgelegt wird, daß pro Mol reaktive Polyol-Hydroxylgruppe mindestens 1,05 bis etwa 1,5 Isocyanat-Gruppen verwendet wird, gelangt man zu flüssigen, hochviskosen Urethanpräpolymeren mit endständigen Isocyanatgruppen.

Die der vorgenannten Formel I zugrundeliegende Thiophenverbindungen können leicht hergestellt werden, indem man beispielsweise gemäß US-A 4 894 463 verfährt.

Die erfindungsgemäßen stabilisierten Überzugsmittel können üblicherweise neben den vier bereits genannten Bestandteilen
a) Urethanpräpolymere mit endständigem Isocyanatgruppen
b) Thiophenderivate der weiter oben angegebenen Formel I
c) Arylsulfonyl+mono+isocyanat
d) Füllstoffen, insbesondere Silikat-Füllstoffen der allgemeinen Formel II
noch weitere, dem Fachmann bekannte Hilfsstoffe, enthalten, wie Antioxydantien, Reaktionsbeschleuniger, Weichmacher, Flammschutzmittel, etc.

Die Erfindung wird durch die folgenden Beispiele bevorzugter Mischungen näher erläutert:

### Beispiel 1

Zur Verdeutlichung der stabilisierenden Wirkung der Thiophenderivate der weiter oben angegebenen Formel I in synergistischer Kombination mit Arylsulfonylmonoisocyanat wurden verschiedene silikatfüllstoffhaltige Zubereitungen mit den nachstehend angegebenen Zusammensetzungen hergestellt.

Die Lagerstabilität der so hergestellten Zusammensetzungen wurde mit dem folgenden Testverfahren ermittelt.

70 ml des fertig formulierten Übverzugsmittels wurden zusammen mit einem teflonisierten Magnetrührstab unter Feuchtigkeitsausschluß und Stickstoffspülung in eine 110 ml fassende Glasflasche gegeben und diese Flasche, gasdicht verschlossen, bei Raumtemperatur aufbewahrt.

Nach jeweils 30 Tagen wurden die Probeflaschen auf den Kopf gestellt und mit einem Hallfeld-Magnetsensor elektronisch geprüft, ob sich der am Boden der Probeflasche liegende, teflonisierte Magnetrührstab in Richtung des Schwerkraftfeldes bewegt.

War dies der Fall, d.h. war der Magnetrührstab in der geprüften Zubereitung noch bewglich, so wurde die betreffende Probeflasche weitere 30 Tage aufbewahrt und die Prüfung fortgesetzt.

Zubereitungen, bei denen der teflonisierte Magnetrührstab nicht mehr beweglich war, wurden als geliert betrachtet, der Lagerversuch dieser betreffenden Probe abgebrochen und als zusätzliche Verifikation die betreffende Probeflasche geöffnet und auf Gelierung untersucht.

Mit jeder der nachstehend aufgeführten Zubereitungen wurden drei Probeflaschen gefüllt.

Die seit der Füllung abgelaufene Zeit in Monaten, an dem die zweite von drei Probeflaschen einer Zubereitungssorte geliert war, wurde als Lagerzeit bis zur erfolgten Gelierung angegeben.

### Zubereitung A

Ein Isocyanat-terminiertes Präpolymer wurde durch Vorreaktion von 7 Mol 2,4-Toluylendiisocyanat 80/20 mit 1 Mol eines Polyoxypropylentriols (OH-Zahl 40,3) und 3 Mol eines Polyoxypropylendiols (OH-Zahl 55,1) bei einer Reaktionstemperatur von weniger als 70° C hergestellt.

100 Gewichtsteile dieses Isocyanat-terminierten Präpolymers wurden mit 0,5 Gew.-Teilen phenolischem Antioxidans, 1 Gew.-Teil Dibutylzinndilaurat (Reaktionsbeschleuniger) und 0,8 Gew.-Teilen p-Cumylsulfonylisocyanat vermischt und daran anschließend so viel Diisooctyladipat (Weichmacher) und Talkum eingerührt, daß die Pigmentvolumenkonzentration PVK an Talkum 10% und der freie Isocyanatgehalt aus dem umgesetzten Toluylendiisocyanat 1,0 Gew.-% der Gesamtzubereitung betrug.

Der eingesetzte Silikat-Füllstoff Talkum hatte eine Restfeuchtigkeit von 0,06% (Xylol-Methode) und eine chemische Zusammensetzung wie folgt:
SiO₂: 59,15%; Al₂O₃: 0,26%; Fe₂O₃: 3,36%; CaO: 0,15%; MgO: 31,34%; CO₂: 1,76%; H₂O (aus Glühverlust): 5,4%.

### Zubereitung B

100 Gew.-Teile. der vorstehenden Zubereitung A wurden mit 0,25 Gew.-Teilen. Thiophenderivat der eingangs angegebenen Formel I vermischt, wobei in der angegebenen Formel R₃ -CH₂-CH₂-CH₂-CH₂-CO-O-C₂H₅ ist.

### Zubereitung C

Die Zusammensetzung entspricht Zubereitung A bis auf das Fehlen von 0,8 Gew.-Teilen p-Cumylsulfonylisocyanat. Stattdessen werden 100 Gew-Teile Präpolymer mit 0,4 Gew-Teilen Thiophenderivat der eingangs angegebenen Formel I vermischt, wobei in der angegebenen Formel R₃ -CH₂-CH₂-CH₂-CH₂-CO-O-C₂H₅ ist.

### Zubereitung D

Ein Isocyanat-terminiertes Präpolymer wurde durch Vorreaktion von 15 Mol Isophorondiisocyanat mit 2 Mol eines Polybutadiendiols der Funktionalität 2,5 (OH-Zahl 45,2) und 8 Mol eines Polyoxypropylendiols (OH-Zahl 55,1) bei weniger als 70°C Reaktionstemperatur hergestellt. 100 Gewichtsteile dieses Isocyanat-terminierten Präpolymers wurden mit 0,5 Gew Teilen Irganox^{R} 1076 (Antioxydans), 0,8 Gew.-Teilen Dibutylzinndilaurat (Reaktionsbeschleuniger) und 0,4 Gew Teile p-Toluolsulfonylisocyanat vermischt und daran anschließend so viel Diisooctylphthalat (Weichmacher) und Kaolin eingerührt, daß die Pigmentvolumenkonzentration PVK an Kaolin 10 % und der freie Isocyanatgehalt aus dem umgesetzten Isophorondiisocyanat 0,9 Gew.% der Gesamtzubereitung betrug.

Der eingesetzte Silikat-Füllstoff Kaolin hatte eine Restfeuchtigkeit von 0,04 % (Xylol-Methode) und eine chemische Zusammensetzung wie folgt: SiO₂: 47,40%; Al₂O₃: 38,0%, Fe₂O₃: 0,59%; CaO: 0,05%; MgO: 0,41%; K₂O: 1,26%; H₂O aus Glühverlust): 11%.

### Zubereitung E

100 Gew.Teile der vorstehenden Zubereitung D wurden mit 0,25 Gew.-Teilen Thiophenderivat der eingangs angegebenen Formel I vermischt, wobei in der angegebenen Formel R₃ -CH₂-CH₂-CH₂-CH₂-CO-O-C₂H₅ ist.

### Zubereitung F

100 Gew Tl. der vorstehenden Zubereitung D wurden mit 0,20 Gew Tl. Thiophenderivat der eingangs angegebenen Formel I vermischt, wobei in der angegebenen Formel R₃ -CH₂-CH₃ ist.

### Zubereitung G

Die Zusammensetzung entspricht Zubereitung D bis auf das Fehlen von 0,4 Gew.-Teilen p-Toluolsulfonylisocyanat.

### Zubereitung H

Ein Isocyanat-terminiertes Präpolymer wurde durch Vorreaktion von 8 Mol 2,4-Toluylendiisocyanat 80/20 mit 1 Mol eines Polyoxypropylentriols (OH-Zahl 40,3) und 4 Mol eines Polydiglykoladipinats (OH-Zahl 58,2) bei weniger als 70°C Reaktionstemperatur hergestellt.

100 Gewichtsteile dieses Isocyanat-terminierten Präpolymers wurden mit 0,5 Gew.-Teilen phenolischem Antioxidans, 0,5 Gew.-Teilen Dibutylzinndilaurat (Reaktionsbeschleuniger) und 0,8 Gew.-Teilen p-Toluolsulfonylisocyanat vermischt und daran anschließend so viel Dipropylenglykoldibenzoat (Weichmacher) und Glimmerpulver eingeführt, daß die Pigmentvolumenkonzentration PVK an Glimmer 10% und der freie Isocyanatgehalt aus dem umgesetzten Toluylendiisocyanat 0,7 Gew.-% der Gesamtzubereitung betrug.

Der eingesetzte Silikat-Füllstoff Glimmer (Mica) hatte eine Restfeuchtigkeit von 0,05% (Xylol-Methode) und eine chemische Zusammensetzung wie folgt:
SiO₂: 48,30%; Al₂O₃: 31,55%; Fe₂O₃: 2,36%; CaO: 1,25%; MgO: 1,99%; K₂O: 7,86%; Na₂O: 1,20%; TiO₂: 1,04%; H₂O (aus Glühverlust): 4,2%.

### Zubereitung I

100 Gew.- Teile der vorstehenden Zubereitung H wurden mit 0,10 Gew.-Teilen Thiophenderivat der eingangs angegebenen Formel I vermischt, wobei in der angegebenen Formel R₃ -CH₂-CH₂-CH₂-CH₂-CO-O-C₂H₅ ist.

### Zubereitung K

Die Zusammensetzung entspricht Zubereitung H bis auf das Fehlen von 0,8 Gew.- Teilen p-Toluolsulfonylisocyanat.

Wie aus der nachstehenden Tabelle 1 ersichtlich ist, wiesen die erfindungsgemäßen Zubereitungen der Überzugsmittel B, E, F, I eine sehr gute Lagerbeständigkeit auf im Gegensatz zu den anderen silikatfüllstoffhaltigen Zubereitungen, die keinen oder einen nicht erfindungsgemäßen Stabilisator enthielten.

**Tabelle 1**

| Zubereitung | Lagerstabilität in Monaten | Bemerkungen |
|---|---|---|
| A | 6 | |
| B | 16 | erfindungsgemäß |
| C | 7 | |
| D | 5 | |
| E | 15 | erfindungsgemäß |
| F | 14 | erfindungsgemäß |
| G | 2 | |
| H | 6 | |
| I | 12 | erfindungsgemäß |
| K | 3 | |

### Beispiel 2 (Vergleichsbeispiel)

100 Gramm Glimmerpulver wurden in 400 ml trockenem Toluol suspendiert und mit 6 Gramm Phenylisocyanat 3 Tage unter Stickstoff bei 40°C gerührt. Anschließend wurde die Suspension auf einer Drucknutsche mit Toluol gewaschen, bis im Ablauf kein Phenylisocyanat mehr nachweisbar war. Nach Ausblasen mit Stickstoff wurden 160 Gramm toluolfeuchtes Glimmerpulver erhalten.

Der eingesetzte Silikat-Füllstoff Glimmer (Mica) hatte eine Restfeuchtigkeit von 0,05% (Xylol-Methode) und eine chemische Zusammensetzung wie folgt:
SiO₂: 48,30%; Al₂O₃: 31,55%; Fe₂O₃: 2,36%; CaO: 1,25%; MgO: 1,99%; K₂O: 7,86%; Na₂O: 1,20%; TiO₂: 1,04%; H₂O (aus Glühverlust): 4,2%.

Ein Isocyanat-terminiertes Präpolymer wurde durch Vorreaktion von 7 Mol 2,4-Toluylendiisocyanat 80/20 mit 1 Mol eines Polyoxypropylentriols (OH-Zahl 40,3) und 3 Mol eines Polyoxypropylendiols (OH-Zahl 55,1) unterhalb 70°C Reaktionstemperatur hergestellt.

100 Gewichtsteile dieses Isocyanat-terminierten Präpolymers wurden mit 0,5 Gew.-Teilen phenolischem Antioxidans, 1 Gew.-Teil Dibutylzinndilaurat (Reaktionsbeschleuniger) vermischt und daran anschließend so viel Diisooctyladipat (Weichmacher) und toluolfeuchtes Glimmerpulver eingeführt, daß die Pigmentvolumenkonzentration PVK an Glimmer 10% und der freie Isocyanatgehalt aus dem umgesetzten Toluylendiisocyanat 1,0 Gew.% der Gesamtzubereitung betrug. Nach zweimonatiger Lagerung bei Raumtemperatur unter den im Beispiel 1 angeführten Prüfbedingungen war die Zubereitung geliert.

## Patentansprüche

1. Mineralisch gefüllte Überzugsmittel auf Basis von Urethanprepolymeren mit freien Isocyanatgruppen, gekennzeichnet durch den stabilisierenden Zusatz einer Kombination aus
a) einem Thiophenderivat der Formel I 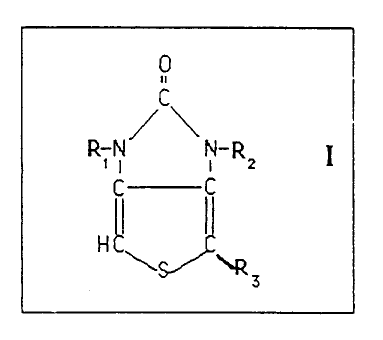 worin R₁ und R₂ jeweils eine Acylgruppe mit 1 bis 8 C-Atomen ist und R₃ ein organischer Rest mit 1 bis 12 C-Atomen ist, sowie
b) einem Arylsulfonylisocyanat der Formel
R₄-SO₂-N=C=O
worin R₄ ein ein- oder zweikerniger aromatischer Kohlenwasserstoff mit bis zu 12 C-Atomen ist, der durch ein oder mehrere mit dem Überzugsmittel unreaktive Substituenten substituiert sein kann.

2. Überzugsmittel nach Anspruch 1, dadurch gekennzeichnet, daß R₁ und R₂ beide Acetyl sind.

3. Überzugsmittel nach Anspruch 1 oder 2, dadurch gekennzeichnet, daß R₃ ein Kohlenwasserstoffrest ist, der durch einen oder mehrere mit dem Überzugsmittel unreaktive Substituenten substituiert sein kann.

4. Überzugsmittel nach Anspruch 3, dadurch gekennzeichnet, daß R₃ ein Alkylrest mit bis zu 8 C-Atomen ist, der durch Halogen, NO₂, CN, Alkoxy oder Carbonyloxyalkyl substituiert sein kann.

5. Überzugsmittel nach einem der vorstehenden Ansprüche, dadurch gekennzeichnet, daß R₄ Phenyl oder Naphthyl ist, das gegebenenfalls durch ein oder mehrere Halogenatome, Alkyl- oder Alkoxygruppen substituiert sein kann.

6. Überzugsmittel nach einem der vorstehenden Ansprüche, gekennzeichnet durch einen Silikat-Füllstoff.

7. Überzugsmittel nach Anspruch 6, dadurch gekennzeichnet, daß der Silikat-Füllstoff die allgemeine Formel II aufweist 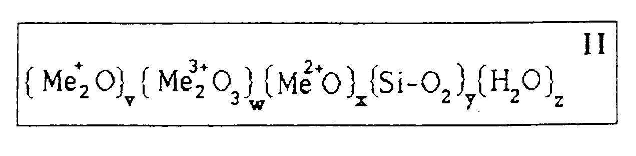 worin Me ein Metallkation der durch die Ladung angegebenen Wertigkeit ist und v, w, x, y und z die dem jeweiligen Mineral entsprechenden stöchiometrischen Verhältniszahlen sind.

8. Überzugsmittel nach einem der vorstehenden Ansprüche, dadurch gekennzeichnet, daß es das Thiophenderivat der Formel I in einer Menge von 0,01 bis 1,0 Gew.-%, vorzugsweise von 0,1 bis 0,5 Gew.-%, bezogen auf ds Präpolymer, enthält.

9. Überzugsmittel nach einem der vorstehenden Ansprüche, dadurch gekennzeichnet, daß es das Arylsulfonylmonoisocyanat in einer Menge von 0,01 bis 1,0 Gew.-%, vorzugsweise 0,1 bis 0,5 Gew.-%, bezogen auf das Präpolymer, enthält.

10. Überzugsmittel nach einem der vorstehenden Ansprüche, dadurch gekennzeichnet, daß es als Thiophenderivat der Formel I 1,2-Diacetyl-4-(4-ethoxycarbonylbutanoyl)-1H,3H-thieno⁺[3,4-d] imidazol-2-on oder 1,2-Diacetyl-4-ethyl-1H,3H-thieno-[3,4-d]imidazol-2-on enthält.

11. Überzugsmittel nach einem der vorstehenden Ansprüche, dadurch gekennzeichnet, daß es Urethanpräpolymer mit endständigen Isocyanatgruppen in einer Menge von 0,2 bis 1,4 Gew.-%, bezogen auf die gesamte Zubereitung, enthält.

## Claims

1. Minerally filled coatings based on urethane prepolymers comprising free isocyanate groups, characterized by a stabilizing additive of a combination of
a) a thiophene derivative of formula I 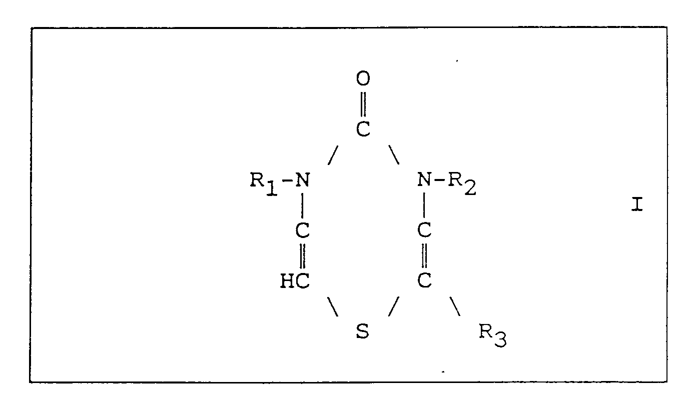 wherein R₁ and R₂ each are an acyl group with 1 to 8 C atoms and R₃ is an organic residue with 1 to 12 C atoms and
b) an arylsulfonyl isocyanate of the formula
R₄-SO₂-N=C=O
wherein R₄ is a mono- or binuclear aromatic hydrocarbon with up to 12 C atoms, which may be substituted by one or more substituents non-reactive with the coating.

2. Coating according to claim 1, characterized in that R₁ and R₂ both are acetyl.

3. Coating according to claim 1 or 2, characterized in that R₃ is a hydrocarbon residue which may be substituted by one or more substituents non-reactive with the coating.

4. Coating according to claim 3, characterized in that R₃ is an alkyl residue with up to 8 C atoms, which may be substituted by halogen, NO₂, CN, alkoxy or carbonyloxyalkyl.

5. Coating according to anyone of the preceeding claims, characterized in that R₄ is phenyl or naphthyl, optionally substituted by one or more halogen atoms, alkyl or alkoxy groups.

6. Coating according to anyone of the preceeding claims, characterized by a silicate filler.

7. Coating according to claim 6, characterized in that the silicate filler has general formula II 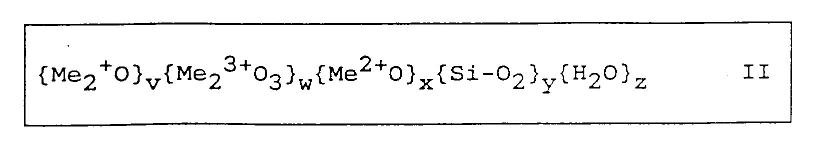 wherein Me is a metal cation of a valency given by the charge and v, w, x, y and z are the stoichiometric values corresponding to the respective mineral.

8. Coating according to anyone of the preceeding claims, characterized in that it contains the thiophene derivative of formula I in an amount of 0.01 to 1.0 % by weight, preferably of 0.1 to 0.5 % by weight, based on the prepolymer.

9. Coating according to anyone of the preceeding claims, characterized in that the arylsulfonyl monoisocyanate is present in an amount of 0.01 to 1.0 % by weight, preferably of 0.1 to 0.5 % by weight, based on the prepolymer.

10. Coating according to anyone of the preceeding claims, characterized in that the thiophene derivative of formula I is 1,2-diacetyl-4-(4-ethoxycarbonylbutanoyl)-1H,3H-thieno[3,4-d]imidazol-2-one.

11. Coating according to anyone of the preceeding claims, characterized in that it contains urethane prepolymer having terminal isocyanate groups in an amount of 0.2 to 1.4 % by weight, based on the total composition.

## Revendications

1. Produits de revêtement, contenant des charges minérales, à base de prépolymères d'uréthanes à groupes isocyanates libres, caractérisés en ce qu'ils contiennent en tant qu'additif stabilisant une combinaison de :
a) un dérivé du thiophène de formule I : 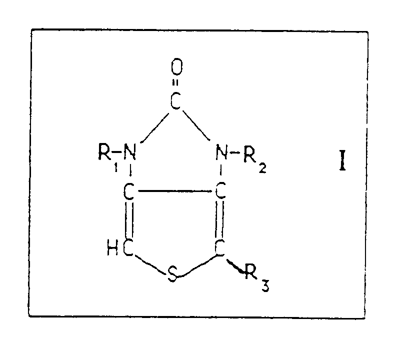 dans laquelle R₁ et R₂ représentent chacun un groupe acyle en C₁ à C₈ et R₃ un radical organique en C₁ à C₁₂, et
b) un arylsulfonylisocyanate de formule :
R₄-SO₂-N=C=O
dans laquelle R₄ représente un radical hydrocarboné aromatique mono- ou bi-cyclique contenant jusqu'à 12 atomes de carbone et qui peut porter un ou plusieurs substituants non réactifs avec le produit de revêtement.

2. Produit de revêtement selon la revendication 1, caractérisé en ce que R₁ et R₂ représentent tous deux des groupes acétyles.

3. Produit de revêtement selon la revendication 1 ou 2, caractérisé en ce que R₃ représente un radical hydrocarboné portant un ou plusieurs substituants non réactifs avec le produit de revêtement.

4. Produit de revêtement selon la revendication 3, caractérisé en ce que R₃ représente un groupe alkyle contenant jusqu'à 8 atomes de carbone qui peut porter des substituants halogéno, NO₂, CN, alcoxy ou carbonyloxyalkyle.

5. Produit de revêtement selon l'une des revendications qui précède, caractérisé en ce que R₄ représente un groupe phényle ou naphtyle portant éventuellement un ou plusieurs substituants halogéno, alkyle ou alcoxy.

6. Produit de revêtement selon l'une des revendications qui précède, caractérisé en ce qu'il contient une matière de charge du type silicate.

7. Produit de revêtement selon la revendication 6, caractérisé en ce que la matière de charge du type silicate répond à la formule générale II : 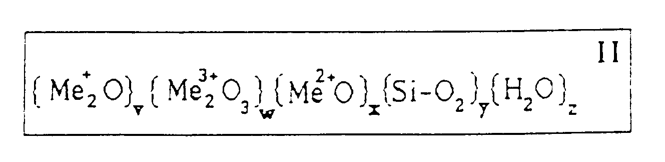 dans laquelle Me⁺ représente un cation métallique dont la valence est indiquée par la charge et v, w, x, y et z sont des indices correspondant aux proportions stoechiométriques de la matière minérale particulière.

8. Produit de revêtement selon l'une des revendications qui précède, caractérisé en ce qu'il contient le dérivé du thiophène de formule I en quantité de 0,01 à 1,0 %, de préférence de 0,1 à 0,5 % du poids du prépolymère.

9. Produit de revêtement selon l'une des revendications qui précède, caractérisé en ce qu'il contient l'arylsulfonylmonoisocyanate en quantité de 0,01 à 1,0 %, de préférence de 0,1 à 0,5 % du poids du prépolymère.

10. Produit de revêtement selon l'une des revendications qui précède, caractérisé en ce qu'il contient en tant que dérivé du thiophène de formule I la 1,2-diacétyl-4-(4-éthoxycarbonylbutanoyl)-1H,3H-thiéno⁺[3,4-d]imidazol-2-one ou la 1,2-diacétyl-4-éthyl-1H,3H-thiéno[3,4-d]imidazol-2-one.

11. Produit de revêtement selon l'une des revendications qui précède, caractérisé en ce qu'il contient un prépolymère d'uréthane à groupes isocyanates terminaux en quantité de 0,2 à 1,4 % du poids de la composition totale.
